# EUROPEAN PATENT APPLICATION

(11) **EP 4 645 427 A1**
(43) Date of publication of application: **05.11.2025**
(21) Application number: 25168638.2
(22) Date of filing: 04.04.2025
(51) Int. Cl.: H01M 4/131, H01M 4/136, H01M 4/36, H01M 4/58, H01M 10/05, H01M 4/02

(54) **POSITIVE ELECTRODE AND RECHARGEABLE LITHIUM BATTERY INCLUDING THE SAME**

(30) Priority: 29.04.2024 KR 20240057127
(71) Applicant: SAMSUNG SDI CO., LTD., Yongin-si, Gyeonggi-do 17084 (KR)
(72) Inventor: KIM, Young-Ki, 17084 Yongin-si (KR); CHOI, Aram, 17084 Yongin-si (KR); KIM, Sangmi, 17084 Yongin-si (KR); DOO, Sungwook, 17084 Yongin-si (KR); KANG, Gwiwoon, 17084 Yongin-si (KR); LEE, Soonrewl, 17084 Yongin-si (KR)
(74) Representative: Marks & Clerk LLP

(57) **Abstract**

Examples of the disclosure include a positive electrode, a rechargeable lithium battery including the positive electrode, and a positive electrode for a rechargeable lithium battery including a current collector, a first active material layer on the current collector. The first active material layer includes a first particle, a second particle, a first binder, and a first conductive material, and a second active material layer on the first active material layer. The second active material layer includes a third particle, a second binder, and a second conductive material. The first particle contains an olivine structured compound, the second particle contains a layered compound, the third particle contains an olivine structured compound, the first active material layer and the second active material layer have a cobalt (Co) content that is less than about 100 ppm, the first particle includes a plurality of first primary particles aggregated together.

## Description

### BACKGROUND

Examples of the present disclosure relate to a positive electrode, and a rechargeable lithium battery including the positive electrode, and more particularly, to a positive electrode including an olivine-based lithium compound, and a rechargeable lithium battery including the positive electrode.

The increased adoption of battery-powered electronics, such as, e.g., mobile phones, laptop computers, and electric vehicles, has driven a rise in demand for rechargeable batteries having high energy density and high capacity. Accordingly, improving the performance of rechargeable lithium batteries may be advantageous.

Rechargeable lithium batteries typically include a positive electrode and a negative electrode, each of the positive electrode and the negative electrode including an active material that allows intercalation and deintercalation of lithium ions, and an electrolyte solution, and produce electrical energy from redox reactions that take place as lithium ions are intercalated into or deintercalated from the positive electrode and the negative electrode.

### SUMMARY

Examples of the present disclosure include a positive electrode for a rechargeable lithium battery, the positive electrode being capable of increasing binding force of a positive active material layer with respect to a current collector, reducing resistance of an electrode plate, and facilitating preparation of an electrode plate. Examples of the present disclosure also include a rechargeable lithium battery having desired or improved capacity and lifetime characteristics along with high operating voltage and energy density.

An example embodiment of the present disclosure includes a positive electrode for a rechargeable lithium battery, the positive electrode including a current collector, a first active material layer on the current collector, including a first particle, a second particle, a first binder, and a first conductive material, and a second active material layer on the first active material layer, the second active material layer including a third particle, a second binder, and a second conductive material. The first particle contains an olivine structured compound of Formula 1 below, the second particle contains a layered compound of Formula 2 below, and the third particle contains an olivine structured compound of Formula 3 below. The first active material layer and the second active material layer have a cobalt (Co) content that is less than about 100 ppm, the first particle includes a plurality of first primary particles aggregated together, the first particle has an average particle diameter of about 3 µm to about 10 µm, the first primary particles have a particle size of about 200 nm or less, the third particle is a single particle, and the third particle has an average particle diameter of about 100 nm to about 2 µm.

Formula 1: Liₐ₁Mnₓ₁Fe_{y1}B1_{z1}PO_{4-b1}

In Formula 1 above, 0.8≤a1≤1.2, 0.4≤x1≤0.8, 0≤y1≤0.6, 0≤z1≤0.05, 0≤b1≤0.05, and x1 + y1 + z1 = 1 are satisfied, and B1 includes at least one of Al, Ti, V, and Mg,

Formula 2: Liₐ₂Niₓ₂Mn_{z2}Al_{c2}Y_{d2}O_{2-b2}

in Formula 2 above, 0.8<a2≤1.2, 0.7≤x2≤0.8, 0.2≤z2≤0.3, 0≤c2≤0.02, 0≤d2≤0.003, 0≤b2≤0.05, and x2 + z2 + c2 + d2 = 1 are satisfied, and Y includes at least one of Ti, Mg, Zr, Mo, and Nb, and

Formula 3: Liₐ₃Mnₓ₃Fe_{y3}B3_{z3}PO_{4-b3}

in Formula 3 above, 0.8≤a3≤1.2, 0.4≤x3≤0.8, 0≤y3≤0.6, 0≤z3≤0.05, 0≤b3≤0.05, and x3 + y3 + z3 = 1 are satisfied, and B3 includes at least one of Al, Ti, V, and Mg.

In an example embodiment of the present disclosure, a positive electrode for a rechargeable lithium battery includes a current collector, a first active material layer on the current collector, including a first particle, a second particle, a first binder, and a first conductive material, and a second active material layer on the first active material layer, the second active material layer including a third particle, a second binder, and a second conductive material. The first particle contains an olivine structured compound of Formula 1 below, the second particle contains a layered compound of Formula 2 below, and the third particle contains an olivine structured compound of Formula 3 below. The first active material layer and the second active material layer have a cobalt (Co) content that is less than about 100 ppm, the first particle includes a plurality of first primary particles aggregated together, the first particle has an average particle diameter of about 3 µm to about 10 µm, the first primary particles have a particle size of about 200 nm or less, the third particle includes a plurality of fourth particles aggregated together, the third particle has an average particle diameter of about 3 µm to about 10 µm, the plurality of fourth particles are each primary particles, and the plurality of fourth particles have a particle diameter of about 200 nm or less.

Formula 1: Liₐ₁Mnₓ₁Fe_{y1}B1_{z1}PO_{4-b1}

In Formula 1 above, 0.8≤a1≤1.2, 0.4≤x1≤0.8, 0≤y1≤0.6, 0≤z1≤0.05, 0≤b1≤0.05, and x1 + y1 + z1 = 1 are satisfied, and B1 includes at least one of Al, Ti, V, and Mg,

Formula 2: Liₐ₂Niₓ₂Mn_{z2}Al_{c2}Y_{d2}O_{2-b2}

in Formula 2 above, 0.8<a2≤1.2, 0.7≤x2≤0.8, 0.2≤z2≤0.3, 0≤c2≤0.02, 0≤d2≤0.003, 0≤b2≤0.05, and x2 + z2 + c2 + d2 = 1 are satisfied, and Y includes at least one of Ti, Mg, Zr, Mo, and Nb, and

Formula 3: Liₐ₃Mnₓ₃Fe_{y3}B3_{z3}PO_{4-b3}

in Formula 3 above, 0.8≤a3≤1.2, 0.4≤x3≤0.8, 0≤y3≤0.6, 0≤z3≤0.05, 0≤b3≤0.05, and x3 + y3 + z3 = 1 are satisfied, and B3 includes at least one of Al, Ti, V, and Mg.

In an example embodiment of the present disclosure, a rechargeable lithium battery includes the positive electrode described above.

At least some of the above and other features of the invention are set out in the claims.

### BRIEF DESCRIPTION OF THE FIGURES

The accompanying drawings are included to provide a further understanding of the present disclosure, and are incorporated in and constitute a part of this specification. The drawings illustrate example embodiments of the present disclosure and, together with the description, explain principles of the present disclosure. In the drawings:
FIG. 1 is a simplified conceptual diagram showing a rechargeable lithium battery according to example embodiments of the present disclosure;
FIGS. 2 to 5 are schematic views illustrating a rechargeable lithium battery according to an example embodiment. FIG. 2 shows a cylindrical battery, FIG. 3 shows a prismatic battery, and FIGS. 4 and 5 show pouch-type batteries;
FIG. 6 is a cross-sectional view showing a positive electrode for a rechargeable battery according to example embodiments of the present disclosure;
FIG. 7 is an enlarged view showing a first active material layer according to example embodiments of the present disclosure;
FIG. 8 is an enlarged view showing a second active material layer according to an example embodiment of the present disclosure;
FIG. 9 is an enlarged view showing a second active material layer according to another example embodiment of the present disclosure;
FIG. 10 is an enlarged view showing a positive electrode active material layer according to Comparative Examples of the present disclosure;
FIG. 11 is an SEM image showing a first particle according to an example embodiment of the present disclosure;
FIG. 12 is an SEM image showing a second particle according to an example embodiment of the present disclosure;
FIG. 13 is an SEM image showing a third particle in the form of a single particle according to an example embodiment of the present disclosure; and
FIG. 14 is an SEM image showing a third particle in the form of a secondary particle according to another example embodiment of the present disclosure.

### DETAILED DESCRIPTION

In order to sufficiently understand the configuration and effects of the present disclosure, example embodiments of the present disclosure will be described with reference to the accompanying drawings. It should be noted, however, that the present disclosure is not limited to the following example embodiments, and may be implemented in various forms and variously modified. The example embodiments herein are provided so that present disclosure will be thorough and complete and will fully convey the scope of the present disclosure to those skilled in the art.

Herein, it will be understood that when a component is referred to as being "on" another component, the component may be directly on another component, or an intervening third component may be present. In addition, in the drawings, thicknesses of components are exaggerated for effectively describing technical contents. Like reference numerals refer to like elements throughout.

The example embodiments described herein will be explained with reference to the cross-sectional views and/or plan views as ideal example views of the present disclosure. In the drawing, the thicknesses of films and regions are exaggerated for effective description of the technical contents. Thus, regions presented as an example in the drawings have general properties, and shapes of the exemplified areas are used to illustrate a specific shape of a device region. Therefore, this should not be construed as limited to the scope of the present disclosure. Although the terms such as first, second, and third are used to describe various components in various example embodiments herein, the components should not be limited to these terms. These terms are used only to distinguish one component from another component. Example embodiments described and exemplified herein include example embodiments thereof.

Terms used herein are not for limiting the present disclosure but for describing the example embodiments. As used herein, the singular forms include the plural forms as well, unless the context clearly indicates otherwise. The meaning of "comprises" and/or "comprising" used herein does not exclude the presence or addition of one or more other components besides a mentioned component.

When the terms "about" or "substantially" are used in this specification in connection with a numerical value, it is intended that the associated numerical value includes a tolerance of ±10% around the stated numerical value. When ranges are specified, the range includes all values therebetween such as increments of 0.1%.

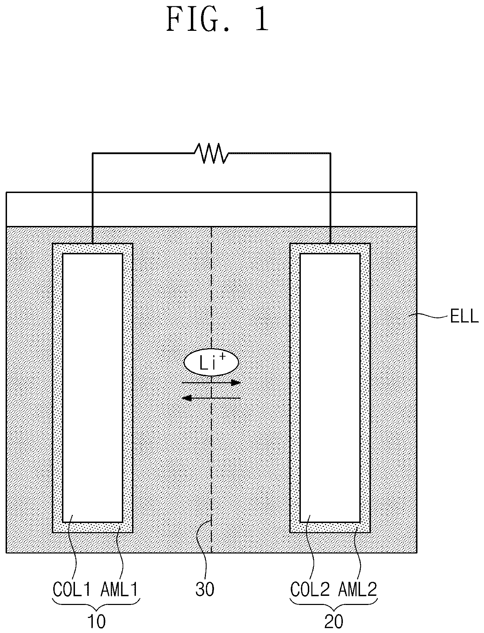

FIG. 1 is a simplified conceptual diagram showing a rechargeable lithium battery according to example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a rechargeable lithium battery includes a current collector COL1 and a positive electrode active material layer AML1 on the current collector COL1. The positive electrode active material layer AML1 includes a positive electrode active material and further includes a binder and a conductive material (e.g., an electrically conductive material).

For example, the positive electrode 10 may further include an additive constituting a sacrificial positive electrode.

Al may be included as the current collector COL1, but the example embodiment of the present disclosure is not limited thereto.

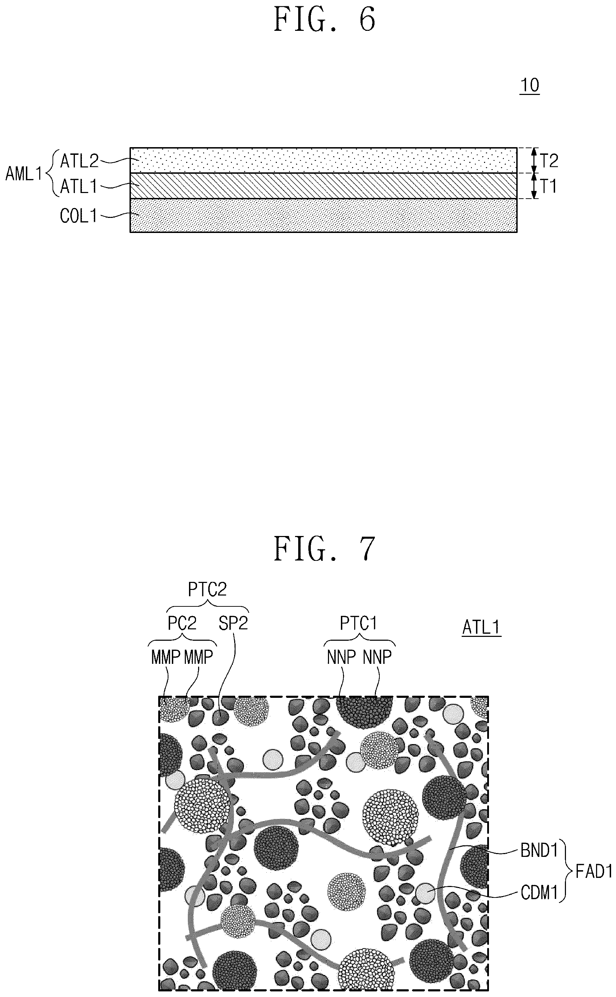

The positive electrode 10 will be described in detail later with reference to FIG. 6.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may be configured to attach the negative electrode active material particles to each other, and to attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinyl pyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is or includes the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may be configured to impart conductivity (e.g., electrical conductivity) to the electrode. Any material that does not cause chemical change (e.g., does not cause an undesirable chemical change in the rechargeable lithium battery), and that conducts electrons, may be included in the battery. Non-limiting examples thereof may include a carbon-based material such as or including at least one of natural graphite, artificial graphite, carbon black, acetylene black, ketjen black, a carbon fiber, a carbon nanofiber, and a carbon nanotube; a metal-based material including at least one of copper, nickel, aluminium, silver, etc. in a form of a metal powder or a metal fiber; a conductive polymer such as a polyphenylene derivative; or a mixture thereof.

The current collector COL2 may include at least one of a copper foil, a nickel foil, a stainless steel foil, a titanium foil, a nickel foam, a copper foam, a polymer substrate coated with a conductive metal, or a combination thereof.

### Negative Electrode Active Material

The negative electrode active material in the negative electrode active material layer AML2 may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. Examples of the crystalline carbon may be or include graphite such as irregular, planar, flaky, spherical, or fibrous natural graphite or artificial graphite, and examples of the amorphous carbon may be or include at least one of soft carbon (low-temperature fired carbon), hard carbon, mesophase pitch carbide, fired cokes, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x < 2), and a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon, and silicon particles and an amorphous carbon coating layer on a surface of the core.

The Si-based negative electrode active material or the Sn-based negative electrode active material may be included in combination with a carbon-based negative electrode active material.

### Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof, on one or both surfaces of the porous substrate.

The porous substrate may be or include a polymer film formed of or including any one or more of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

### Electrolyte Solution ELL

The electrolyte solution ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like, and the aprotic solvent may include at least one of nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be included alone or in combination of two or more solvents.

In addition, when using a carbonate-based solvent, a cyclic carbonate and a chain carbonate may be mixed and used, and the cyclic carbonate and the chain carbonate may be mixed in a volume ratio of about 1:1 to about 1:9.

In examples, the lithium salt dissolved in the organic solvent supplies lithium ions in a battery, enables a basic operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato)borate (LiBOB).

### Rechargeable Lithium Battery

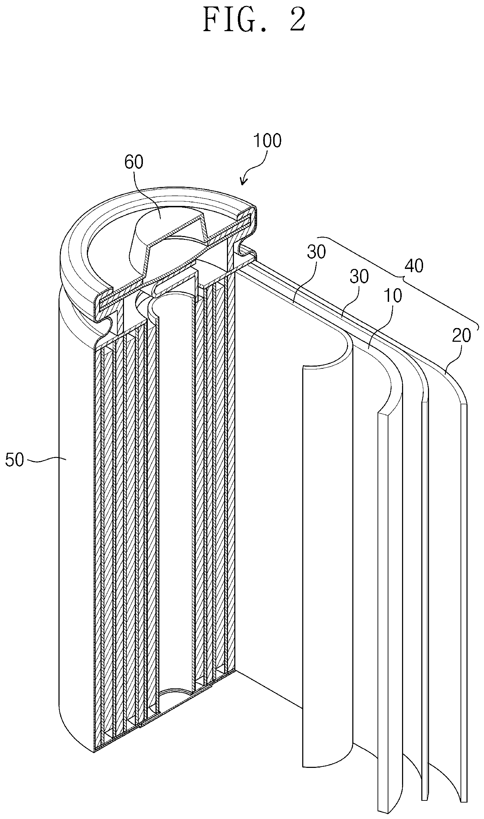

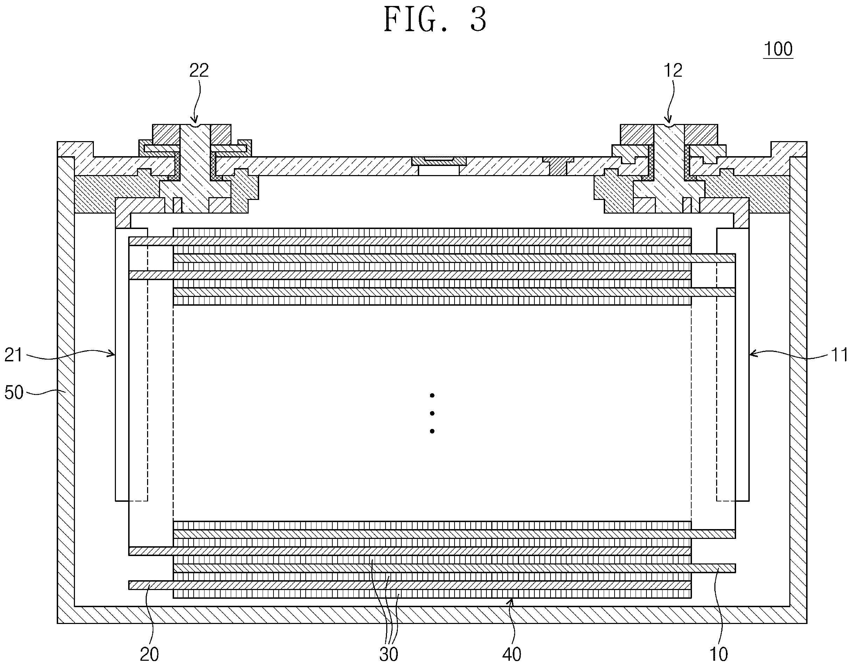

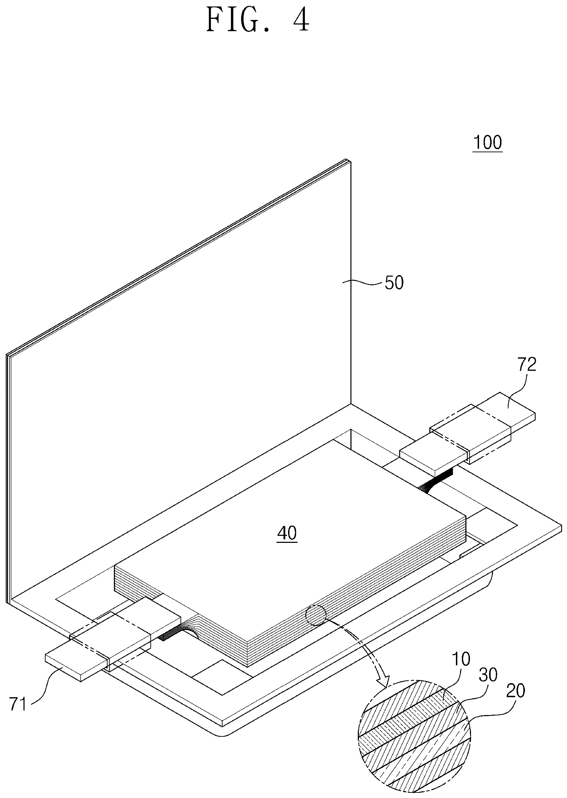

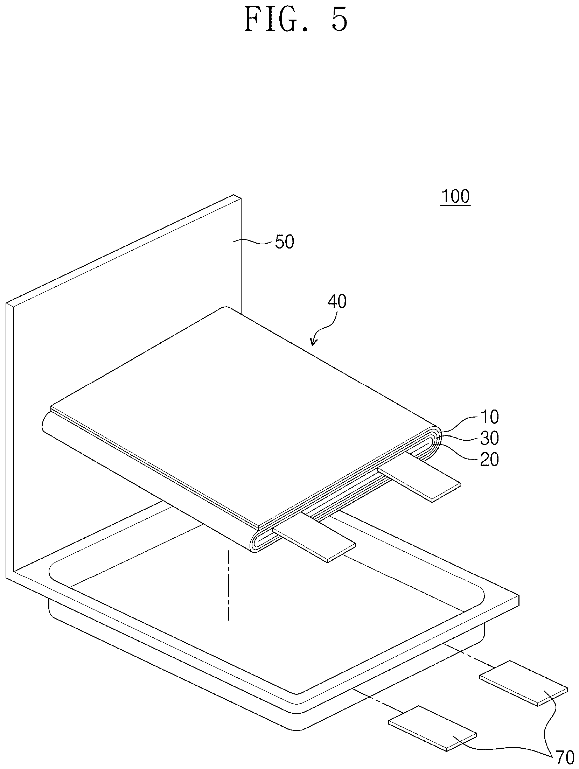

The rechargeable lithium battery may be classified into cylindrical, prismatic, pouch, or coin-type batteries, and the like depending on their shape. FIGS. 2 to 5 are schematic views illustrating a rechargeable lithium battery according to an example embodiment. FIG. 2 illustrates a cylindrical battery, FIG. 3 illustrates a prismatic battery, and FIGS. 4 and 5 illustrate pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to automobiles, mobile phones, and/or various types of electric devices, as non-limiting examples.

FIG. 6 is a cross-sectional view showing a positive electrode for a rechargeable lithium battery according to example embodiments of the present disclosure. Referring to FIG. 6, as described above, the positive electrode 10 includes a current collector COL1 and a positive electrode active material layer AML1. The positive electrode active material layer AML1 is provided on the current collector COL1.

The positive electrode active material layer AML1 includes positive electrode active material particles PTC1, PTC2, and PTC3, which will be described later. The positive electrode active material layer AML1 may contain about 90 wt% to about 99 wt% of the positive electrode active material particles PTC1, PTC2, and PTC3 with respect to 100 wt% of the positive electrode active material layer AML1.

The positive electrode active material layer AML1 includes binders BND1 and BND2 and conductive materials CDM1 and CDM2, which will be described later. The positive electrode active material layer AML1 may contain about 2.4 wt% to about 6 wt% of each, or at least one, of the binders BND1 and BND2 and the conductive materials CDM1 and CDM2 with respect to 100 wt% of the positive electrode active material layer AML1.

The positive electrode active material layer AML1 includes a first active material layer ATL1 and a second active material layer ATL2. The positive electrode active material layer AML1 includes the first active material layer ATL1 and the second active material layer ATL2, and may thus contain a nano-sized olivine-based compound in large quantities and increase binding force with respect to a current collector, thereby facilitating preparation of an electrode plate and reducing resistance of an electrode plate. In addition, a rechargeable lithium battery having a desired or improved performance may be provided.

The first active material layer ATL1 may have a thickness T1. In an example embodiment, T1 may increase with a rise in weight of the first particle PTC1 and/or the second particle PTC2 included in the first active material layer ATL1. The second active material layer ATL2 may have a thickness T2. In an example embodiment, T2 may increase with a rise in weight of the third particle PTC3 included in the second active material layer ATL2.

A thickness ratio T1:T2 of the first active material layer ATL1 and the second active material layer ATL2 may be about 3:7 to about 7:3. For example, the thickness ratio T1:T2 of the first active material layer ATL1 and the second active material layer ATL2 may be about 5:5. When the thickness ratio T1:T2 of the first active material layer ATL1 and the second active material layer ATL2 satisfies the numerical range described above, the positive electrode active material layer AML1 has improved binding force with respect to the current collector COL1, and may thus facilitate preparation of an electrode plate and reduce resistance of an electrode plate. In addition, a rechargeable lithium battery having desired or improved performance may be provided.

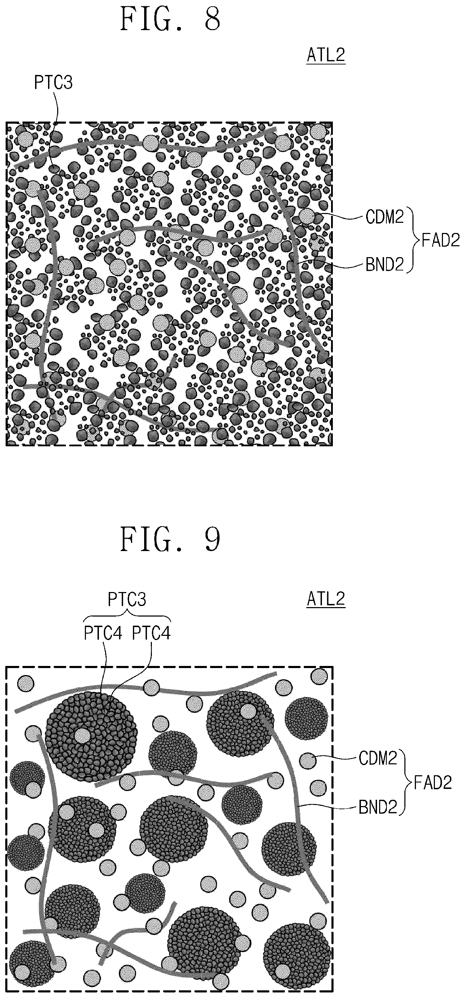

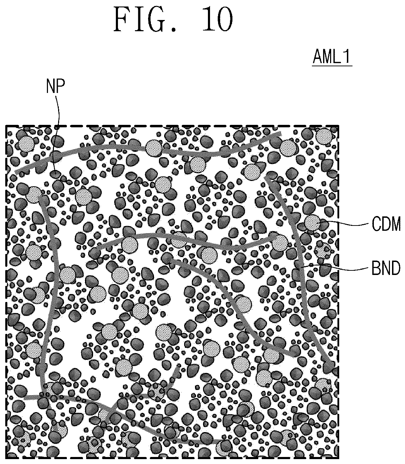

FIG. 7 is an enlarged view showing the first active material layer ATL1 according to example embodiments of the present disclosure. FIG. 8 is an enlarged view showing the second active material layer ATL2 according to an example embodiment of the present disclosure. FIG. 9 is an enlarged view showing the second active material layer ATL2 according to another example embodiment of the present disclosure. FIG. 10 is an enlarged view showing a positive electrode active material layer AML1 according to Comparative Examples of the present disclosure.

Referring to FIG. 7, the first active material layer ATL1 includes a first particle PTC1, a second particle PTC2, and a first functional additive FAD1. The first functional additive FAD1 includes a first binder BND1 and a first conductive material CDM1.

The first active material layer ATL1 includes the second particle PTC2, and may thus reduce the content of the first functional additive FAD1. For example, a weight ratio of the first functional additive FAD1 in the first positive electrode active material layer ATL1 may be about 0.024 to about 0.06 (e.g. about 2.4 parts by weight to about 6.0 parts by weight with respect to 100 parts by weight of the first active material layer ATL1). The weight ratio of the first functional additive FAD1 in the first active material layer ATL1 may be defined as a weight of the first functional additive FAD1 with respect to a total weight of the first active material layer ATL1.

For example, the content of the first binder BND1 may be about 1.2 parts by weight to about 3 parts by weight with respect to 100 parts by weight of the first active material layer ATL1. The content of the first conductive material CDM1 may be about 1.2 parts by weight to about 3 parts by weight with respect to 100 parts by weight of the first active material layer ATL1.

Referring to FIGS. 8 and 9, the second active material layer ATL2 includes a third particle PTC3 and a second functional additive FAD2. The second functional additive FAD2 includes a second binder BND2 and a second conductive material CDM2.

Herein, the weight ratio of the second functional additive FAD2 in the second active material layer ATL2 may be equal to or greater than the weight ratio of the first functional additive FAD1 in the first active material layer ATL1. For example, the weight ratio of the second functional additive FAD2 in the second active material layer ATL2 may be greater than the weight ratio of the first functional additive FAD1 in the first active material layer ATL1.

A ratio of the weight ratio of the second functional additive FAD2 to the weight ratio of the first functional additive FAD1 (weight ratio of the second functional additive/weight ratio of the first functional additive) may be in a range of about 1 to about 4.5. For example, a ratio of the weight ratio of the second functional additive FAD2 to the weight ratio of the first functional additive FAD1 (weight ratio of the second functional additive/weight ratio of the first functional additive) may be in a range of about 1.6 to about 4.5, or about 1.6 to about 4. When the ratio of the weight ratio of the second functional additive FAD2 to the weight ratio of the first functional additive FAD1 satisfies the numerical ranges described above, the positive electrode active material layer AML1 has improved binding force with respect to the current collector COL1, which may thus facilitate the preparation of an electrode plate and reduce resistance of an electrode plate. In addition, a rechargeable lithium battery having desired or improved performance may be provided.

For example, a weight ratio of the second functional additive FAD2 in the second positive electrode active material layer ATL2 may be about 0.024 to about 0.1 (e.g. about 2.4 parts by weight to about 10.0 parts by weight with respect to 100 parts by weight of the second active material layer ATL2). For example, a weight ratio of the second functional additive FAD2 in the second positive electrode active material layer ATL2 may be in a range of about 0.04 to about 0.1 (e.g. about 4.0 parts by weight to about 10.0 parts by weight with respect to 100 parts by weight of the second active material layer ATL2). The weight ratio of the second functional additive FAD2 in the second active material layer ATL2 may be defined as a weight of the second functional additive FAD2 with respect to a total weight of the second active material layer ATL2.

The content of the second binder BND2 may be greater than the content of the first binder BND1. For example, content of the second binder BND2 may be about 1.2 parts by weight to about 5 parts by weight with respect to 100 parts by weight of the second active material layer ATL2. For example, the content of the second binder BND2 may be about 2 parts by weight to about 5 parts by weight with respect to 100 parts by weight of the second active material layer ATL2.

The content of the second conductive material CDM2 may be greater than the content of the first conductive material CDM1. The content of the second conductive material CDM2 may be about 1.2 parts by weight to about 5 parts by weight with respect to 100 parts by weight of the second active material layer ATL2. For example, the content of the second conductive material CDM2 may be about 2 parts by weight to about 5 parts by weight with respect to 100 parts by weight of the second active material layer ATL2.

The binders BND1 and BND2 may be configured to attach the positive electrode active material particles PTC1, PTC2, and PTC3 to one another, and also to attach the positive electrode active materials PTC1 and PTC2 to the current collector COL1. Typical examples of the binders BND1 and BND2 may be or include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but the example embodiment of the present disclosure is not limited thereto.

The conductive materials CDM1 and CDM2 may be configured to impart conductivity (e.g., electrical conductivity) to the electrode. Any material that does not cause chemical change (e.g., does not cause an undesirable chemical change in the rechargeable lithium battery), and that conducts electrons may be included in the battery. Examples of the conductive materials CDM1 and CDM2 may include a carbon-based material such as or including at least one of natural graphite, artificial graphite, carbon black, acetylene black, ketjen black, a carbon fiber, a carbon nanofiber, and a carbon nanotube; a metal-based material including at least one of copper, nickel, aluminium, silver, etc. in a form of a metal powder or a metal fiber; a conductive polymer such as a polyphenylene derivative; or a mixture thereof.

An interface between the first active material layer ATL1 and the second active material layer ATL2 may not be clearly distinguishable through SEM images and the like. However, the interface between the first active material layer ATL1 and the second active material layer ATL2 may be inferred by changes in constituent materials and composition between the layers.

Hereinafter, the first particle PTC1, the second particle PTC2, and the third particle PTC3 will be described in more detail.

### First Particle PTC1

Referring back to FIG. 7, the first particle PTC1 may be in the form of a polycrystal, and may include a secondary particle in which at least two primary particles are aggregated (first secondary particle). That is, one first particle PTC1 includes a plurality of first primary particles NNP aggregated together. The first primary particles NNP may each be a primary particle.

The first particle PTC1 may have an average particle diameter (D50) in a range of about 2 µm to about 15 µm, about 3 µm to about 10 µm, or about 3 µm to about 7 µm. For example, the first particle PTC1 may have an average particle diameter equal to about 5 µm. In an example embodiment, the average particle diameter may be measured through a particle size analyzer. The average particle diameter may indicate a particle diameter when a cumulative volume is about 50 vol% in particle size distribution.

The first particle PTC1 may have a maximum particle diameter (Dmax) of about 10 µm or greater, or about 15 µm or greater.

The particle diameter of the first primary particles NNP may be smaller than the average particle diameter of the first particle PTC1. The first primary particles NNP may have a particle diameter (e.g. average particle diameter) of about 200 nm or less. For example, the first primary particles NNP may have a particle diameter in a range of about 10 nm to about 200 nm, about 20 nm to about 200 nm, about 50 nm to about 200 nm, or about 100 nm to about 200 nm. In an example embodiment, the particle diameter of the first primary particles NNP may indicate a diameter measured by randomly selecting about 30 first primary particles NNP from an electron micrograph of a positive electrode active material. The first primary particles NNP may have a substantially uniform particle diameter.

When the particle diameters of the first particle PTC1 and of the first primary particles NNP satisfy the ranges described above, and the size of the first primary particles NNP is substantially uniform, a rechargeable lithium battery containing the first particle PTC1 and the first primary particles NNP may have improved charge/discharge capacity and low-temperature capacity.

The first particle PTC1 includes an olivine-based lithium compound represented by Formula 1 below.

Formula 1: Liₐ₁Mnₓ₁Fe_{y1}B1_{z1}PO_{4-b1}

In Formula 1 above, 0.8≤a1≤1.2, 0.4≤x1≤0.8, 0≤y1≤0.6 (e.g. 0.2≤y1≤0.6), 0≤z1≤0.05, 0≤b1≤0.05, and x1 + y1 + z1 = 1 are satisfied. For example, z1 may be equal to about 0.002.

B1 includes at least one of Al, Ti, V, and Mg. For example, B1 may include Ti. B1 may be or include a dopant with which the first particle PTC1 is doped. B1 may control the first primary particles NNP to be substantially uniform in size.

A doping amount of B1 may be in a range of about 500 ppm to about 3000 ppm. The doping amount of B1 may be defined as a weight of the doping element B1 with respect to a total weight of metals (i.e., Mn, Fe and B1) excluding lithium among the olivine-based lithium compounds represented by Formula 1 above. When the doping amount of B1 satisfies the range described above, the size of the first particle PTC1 may be controlled to be substantially uniform.

In an example embodiment, the first particle PTC1 may include a coating layer on a surface thereof. The coating layer may cover the entire surface of the first particle PTC1 or a portion of the surface of the first particle PTC1. For example, the coating layer may include carbon and/or a carbon-containing compound. The first particle PTC1 may have improved structural stability or improved electrical conductivity by the coating layer.

The coating layer may further include at least one of a titanium-containing compound, a magnesium-containing compound and a vanadium-containing compound. Metal-containing compounds, such as or including at least one of titanium-containing compounds, magnesium-containing compounds, and vanadium-containing compounds, may be or include, for example, at least one of metal oxides, metal hydroxides, metal carbonates, composites thereof, or mixtures thereof. The metal-containing compounds may further include other metals or non-metallic elements. For example, the metal-containing compounds may further include lithium.

In an example embodiment, the first particle PTC1 may further include a grain boundary coating layer on a surface of each, or at least one, of the first primary particles NNP. The grain boundary coating layer may be present inside the first particle PTC1. The grain boundary coating layer may be formed to be applied along an interface between the first primary particles NNP inside the first particle PTC1. That is, the grain boundary coating layer may indicate a material applied onto a grain boundary inside the first particle PTC1. The grain boundary coating layer may include carbon and/or a carbon-containing compound. The grain boundary coating layer may further include at least one of a titanium-containing compound, a magnesium-containing compound, and a vanadium-containing compound.

The inside of the first particle PTC1 described above may indicate the entire inside portion of the first particle PTC1 excluding the surface of the first particle PTC1. For example, the inside of the first particle PTC1 may indicate a region of the entire inside from about 10 nm in depth, or from about 10 nm to about 2 µm in depth, with respect to the surface of the first particle PTC1.

The first particle PTC1 may further include a grain boundary coating portion, and may thus have greater structural stability and have a substantially uniform coating layer formed on the surface thereof. In addition, the first particle PTC1 may further include a grain boundary coating portion, and may thus have further improved electrical conductivity.

The first particle PTC1 may further include carbon derived from the coating layer and/or the grain boundary coating layer described above. The first particle PTC1 may have a carbon element content in a range of about 0.5 wt% to about 10 wt%, about 1 wt% to about 3 wt%, or about 1.5 wt% to about 2.5 wt%.

The first particle PTC1 may be in the shape of substantially a sphere in which nano-sized first primary particles NNP are aggregated. The first particle PTC1 has the first primary particles NNP closely aggregated, may thus exhibit the following characteristics. The first particle PTC1 may be in the shape of sphere or oval. The average particle diameter (D50) of the first particles PTC1 may be in a range of about 2 µm to about 15 µm. The porosity of the first particles PTC1 may be in a range of about 20% to about 40%. Porosity (n) may be defined as the pore volume (Vₚ) divided by the total volume (Vt) of a particle, or n=Vₚ/Vₜ. The span value of the first particles PTC1 analyzed by a particle size analyzer may be in a range of about 0.3 to about 0.75. In this specification, the span value may be defined by the equation of (D90-D10)/D50. D10, D50 and D90 may refer to the particle size of the particles with cumulative volumes of 10 vol%, 50 vol% and 90 vol%, respectively, in the particle size distribution.

The first particle PTC1 may have a large Brunauer-Emmett-Teller (BET) specific surface area. For example, the first particle PTC1 may have a BET specific surface area in a range of about 10 m²/g to about 30 m²/g. For example, the first particle PTC1 may have a BET specific surface area of about 20 m²/g.

### Second Particle PTC2

Referring back to FIG. 7, the second particle PTC2 includes a layered lithium compound represented by Formula 2 below.

Formula 2: Liₐ₂Niₓ₂Mn_{z2}Al_{c2}Y_{d2}O_{2-b2}

In Formula 2 above, 0.8<a2≤1.2, 0.7≤x2≤0.8, 0.2≤z2≤0.3, 0≤c2≤0.02, 0≤d2≤0.003, 0≤b2≤0.05, and x2 + z2 + c2 + d2 = 1 are satisfied. For example, c2 may be 0.004. For example, d2 may be 0.001.

Y may be or include a dopant with which the second particle PTC2 is doped. Y includes at least one of Ti, Mg, Zr, Mo, and Nb.

The cobalt (Co) content of the second particle PTC2 may be less than about 100 ppm. That is, the second particle PTC2 according to an example embodiment of the present disclosure may substantially contain no cobalt (Co). The second particle PTC2 according to an example embodiment of the present disclosure may be or include a cobalt-free positive electrode active material. The second particle PTC2 may have a lower content of Co than Al. Accordingly, the first active material layer ATL1 and the second active material layer ATL2 may have a cobalt (Co) content that is less than about 100 ppm.

The second particle PTC2 may be indicated as a layered Co-free positive electrode active material, a Co-free nickel-based positive electrode active material, or a Co-free nickel-manganese-based positive electrode active material. "Co-free" may indicate that there is no cobalt or substantially no cobalt, that substantially no cobalt is used, or that only a very small amount of cobalt is contained.

In an example embodiment, the second particle PTC2 may include a coating layer on a surface thereof. The coating layer may substantially entirely cover the surface of the second particle PTC2, or may partially cover the surface of the second particle PTC2. The coating layer may include at least one of a boron-containing compound, a titanium-containing compound, an aluminium-containing compound, or a combination thereof. Metal-containing compounds in the coating layer may be or include, for example, at least one of metal oxides, metal hydroxides, metal carbonates, composites thereof, or mixtures thereof. The compound forming the coating layer may be crystalline or amorphous. The metal-containing compounds may further include other metals or non-metallic elements. For example, the coating layer may further include at least one of lithium, manganese, and/or nickel. Surface modification using the coating layer may stabilize structures and improve thermal stability.

The size of the second particle PTC2 may be in micro units. When the first active material layer ATL1 including the first particle PTC1 and the second particle PTC2 is introduced, the positive electrode active material layer AML1 may contain a nano-sized olivine-based compound in large quantities and have greater binding force with respect to a current collector. This, in turn, may facilitate preparation of an electrode plate and reduce resistance of an electrode plate. In addition, a rechargeable lithium battery having desired or improved performance may be provided.

For example, the second particle PTC2 may be in the form of a single particle. Herein, the single particle may indicate a single type of particle having no grain boundary inside thereof. The single particle may indicate one single particle morphologically present in an independent phase in which particles are not aggregated with one another, a particle having a monolith structure, a particle having a one-body structure, or a non-aggregated particle. For example, the single particle may be a single crystal. In an example embodiment, the single particle may be in the form in which a plurality of second primary particles MMP are attached together. Alternatively, the single particle may be in the form in which about 2 to about 100 second primary particles MMP are attached to one another. Herein, the second particle PTC2 in the form of a single particle may be defined as a second single particle SP2. In addition, a second single particle SP2 may be defined as a small particle.

In an example embodiment, the average particle diameter (D50) may indicate a particle diameter when a cumulative volume is about 50 volume% in a particle size distribution. The average particle diameter (D50) of the second particle PTC2 may be a value measured using a particle size analyzer. Accordingly, the second single particle SP2 may have an average particle diameter (D50) in a range of about 3 µm to about 7 µm, or about 3 µm to about 4 µm. The second single particle SP2 may have a greater average particle diameter (D₅₀) than the first primary particle NNP described above.

For another example, the second particle PTC2 is in the form of a polycrystal and may include a secondary particle in which at least two second primary particles MMP are aggregated. That is, one second particle PTC2 may include a plurality of second primary particles MMP aggregated together. The second particle PTC2 composed of the plurality of second primary particles MMP may be in the shape of sphere or oval. Herein, the second particle PTC2 in the form of a secondary particle may be defined as a second secondary particle PC2. In addition, herein, the second secondary particle PC2 may be defined as a large particle.

In an example embodiment, the average particle diameter (D50) may indicate a particle diameter when a cumulative volume is about 50 volume% in a particle size distribution. The average particle diameter (D50) of the second particle PTC2 may be a value measured using a particle size analyzer. For example, the second secondary particle PC2 may have an average particle diameter (D50) of about 12 µm to about 18 µm. The second secondary particle PC2 may have a greater average particle diameter (D50) than the first particle PTC1.

Herein, the second particle PTC2 may be present as the second single particle SP2 or the second secondary particle PC2. In addition, the second particle PTC2 may be or include a positive electrode active material including the second single particle SP2 and the second secondary particle PC2.

Herein, both the second single particle SP2 and the second secondary particle PC2 may be interpreted to indicate the second particle PTC2. In addition, the second particle PTC2 may be interpreted to indicate one containing the second single particle SP2 and the second secondary particle PC2.

Herein, a case in which the second particle PTC2 is present in the form of both a single particle and a secondary particle, or in the form of both a large particle and a small particle in a positive electrode active material may be called bimodal.

The second particle PTC2 may have a small BET specific surface area. The second particle PTC2 may have a smaller BET specific surface area than the first particle PTC1 and/or the third particle PTC3. For example, the second particle PTC2 may have a BET specific surface area in a range of about 0.8 m²/g to about 1.2 m²/g. For example, the second particle PTC2 may have a BET specific surface area of about 1 m²/g. Accordingly, a small amount of binder may be included in combination with a nano-sized olivine-based compound.

### Third Particle PTC3

Referring back to FIG. 8, the third particle PTC3 is in the form of a single particle. Herein, the single particle may indicate a single type of particle having no grain boundary inside thereof. The single particle may indicate one single particle morphologically present in an independent phase in which particles are not aggregated with one another, a particle having a monolith structure, a particle having a one-body structure, or a non-aggregated particle. For example, the single particle may be a single crystal. Alternatively, the single particle may be or include a particle containing several crystals. The single particle may be in an isolated form. Alternatively, the single particle may be such that about 2 to about 100 single particles are attached to one another. That is, the third particle PTC3 may be provided in various sizes. For example, the third particle PTC3 may have an average particle diameter of about 1 µm. The third particle PTC3 may have a minimum particle diameter in a range of about 20 nm to about 500 nm, or about 200 nm to about 300 nm. For example, the minimum particle diameter may indicate a diameter measured by randomly selecting about 30 primary particles (hereinafter, third primary particles) from an electron micrograph of a positive electrode active material.

The third particle PTC3 may have an average particle diameter (D50) in a range of about 100 nm to about 2 µm or about 500 nm to about 2 µm. For example, the third particle PTC3 may have an average particle diameter of about 1 µm. In an example embodiment, the average particle diameter may be measured through a particle size analyzer. The average particle diameter may indicate a particle diameter when a cumulative volume is about 50 vol% in particle size distribution.

The third particle PTC3 includes an olivine structured compound of Formula 3 below.

Formula 3: Liₐ₃Mnₓ₃Fe_{y3}B3_{z3}PO_{4-b3}

In Formula 3 above, 0.8≤a3≤1.2, 0.4≤x3≤0.8, 0≤y3≤0.6 (0.2≤y3≤0.6), 0≤z3≤0.05, 0≤b3≤0.05, and x3 + y3 + z3 = 1 are satisfied. For example, z3 may be equal to about 0.002.

B3 may be or include a dopant with which the third particle PTC3 is doped. B3 includes at least one of Al, Ti, V, and Mg. B3 controls the third primary particles to be substantially uniform in size and thus rechargeable lithium batteries may have improved charging/discharging efficiency, low-temperature properties, and lifetime characteristics.

In an example embodiment, the third particle PTC3 may include a coating layer on a surface thereof. The coating layer may entirely cover the surface of the third particle PTC3, or may partially cover the surface of the third particle PTC3. For example, the coating layer may include carbon and/or a carbon-containing compound. The third particle PTC3 may have improved structural stability and electrical conductivity through the coating layer.

The coating layer may further include at least one of a titanium-containing compound, a magnesium-containing compound, and a vanadium-containing compound. Metal-containing compounds, such as or including at least one of titanium-containing compounds, magnesium-containing compounds, and vanadium-containing compounds, may be or include, for example, at least one of metal oxides, metal hydroxides, metal carbonates, composites thereof, or mixtures thereof. The metal-containing compounds may further include other metals or non-metallic elements. For example, the metal-containing compounds may further include lithium.

The third particle PTC3 may further include carbon derived from the coating layer described above. The carbon element content in the third particle PTC3 may be in a range of about 0.5 wt% to about 10 wt%, about 1 wt% to about 3 wt%, or about 1.5 wt% to about 2.5 wt%.

The third particle PTC3 may have a large BET specific surface area. For example, the third particle PTC3 may have a BET specific surface area in a range of about 10 m²/g to about 30 m²/g. For example, the third particle PTC3 may have a BET specific surface area of about 20 m²/g.

When the third particle PTC3 is a single particle, the weight ratio of the second functional additive FAD2 in the second active material layer ATL2 may be equal to or greater than the weight ratio of the first functional additive FAD1 in the first active material layer ATL1. Alternatively, the weight ratio of the second functional additive FAD2 in the second active material layer ATL2 may be greater than the weight ratio of the first functional additive FAD1 in the first active material layer ATL1. For example, a ratio of the weight ratio of the second functional additive to the weight ratio of the first functional additive may be in a range of about 1.6 to about 4.

When the third particle PTC3 is a single particle, the content of the second functional additive FAD2 may be in a range of about 4 parts by weight to about 10 parts by weight, or about 6 parts by weight, with respect to 100 parts by weight of the second active material layer ATL2. For example, the content of the second binder BND2 may be in a range of about 2 parts by weight to about 5 parts by weight, or about 3 parts by weight, with respect to 100 parts by weight of the second active material layer. For example, the content of the second conductive material CDM2 may be in a range of about 2 parts by weight to about 5 parts by weight, or about 3 parts by weight, with respect to 100 parts by weight of the second active material layer. When the content of the second functional additive FAD2 satisfies any of the ranges described above, the second active material layer ATL2 may achieve desired binding force.

Referring back to FIG. 9, in another embodiment, the first particle PTC3 is in the form of polycrystal and may include a secondary particle in which at least two primary particles are aggregated (hereinafter, third secondary particle). That is, one third particle PTC3 includes a plurality of fourth particles PTC4 aggregated together. The fourth particles PTC4 may each be a primary particle. The third particle PTC3 may be in the shape of sphere or oval.

In an example embodiment, the third particle PTC3 may further include a grain boundary coating layer on a surface of each, or at least one, of the fourth particles PTC4. The grain boundary coating layer may be present inside the third particle PTC3. The grain boundary coating layer may be formed to be applied along an interface between the fourth particles PTC4 inside the third particle PTC3. That is, the grain boundary coating layer may indicate a material applied onto a grain boundary inside the third particle PTC3. The grain boundary coating layer may include carbon and/or a carbon-containing compound. The grain boundary coating layer may further include at least one of a titanium-containing compound, a magnesium-containing compound, and a vanadium-containing compound.

The inside of the third particle PTC3 described above may indicate the entire inside portion of the third particle PTC3 excluding the surface of the third particle PTC3. For example, the inside of the third particle PTC3 may indicate a region of the entire inside from about 10 nm in depth, or from about 10 nm to about 2 µm in depth, with respect to the surface of the third particle PTC3.

The third particle PTC3 may further include a grain boundary coating portion, and may thus have greater structural stability and have a substantially uniform coating layer formed on the surface thereof. In addition, the third particle PTC3 may further include a grain boundary coating portion, and may thus have further improved electrical conductivity.

The third particle PTC3 may further include carbon derived from the coating layer and/or the grain boundary coating layer described above. The carbon element content in the third particle PTC3 may be in a range of about 0.5 wt% to about 10 wt%, about 1 wt% to about 3 wt%, or about 1.5 wt% to about 2.5 wt%.

When the third particle PTC3 is a secondary particle (third secondary particle), the third particle PTC3 may have an average particle diameter (D50) in a range of about 2 µm to about 15 µm, about 3 µm to about 10 µm, or about 3 µm to about 7 µm. For example, the third particle PTC3 may have an average particle diameter of about 5 µm. The third particle PTC3 may have a greater average particle diameter than a fourth particle PTC4, which will be described later. In an example embodiment, the average particle diameter may be measured through a particle size analyzer. The average particle diameter may indicate a particle diameter when a cumulative volume is about 50 vol% in particle size distribution.

The fourth particle PTC4 may have a particle diameter (e.g. average particle diameter) of about 200 nm or less. For example, the fourth particle PTC4 may have a particle diameter in a range of about 10 nm to about 200 nm, about 20 nm to about 200 nm, about 50 nm to about 200 nm, or about 100 nm to about 200 nm. For example, the particle diameter may indicate a diameter measured by randomly selecting about 30 fourth particles PTC4 from an electron micrograph of a positive electrode active material. The fourth particle PTC4 may have a substantially uniform particle diameter. The fourth particle PTC4 may have a smaller particle diameter than the third primary particle. For example, the particle size of the fourth particle PTC4 may be about 100 nm smaller than the particle size of the third primary particle.

When the fourth particle and the average particle diameter of the fourth particle satisfy the ranges described above, and the size of the fourth particle is substantially uniform, a rechargeable lithium battery containing the fourth particle may have improved charge/discharge capacity and low-temperature capacity.

The third particle PTC3 may be in the shape of sphere in which nano-sized fourth particles PTC4 are aggregated. The third particle PTC3 has the fourth particles PTC4 closely aggregated, may thus exhibit the following characteristics. The third particle PTC3 may be in the shape of sphere or oval. The third particle PTC3 may have an average particle diameter (D50) in a range of about 2 µm to about 15 µm. The third particle PTC3 may have a porosity of about 20% to about 40%. Porosity (n) may be defined as the pore volume (Vₚ) divided by the total volume (Vt) of a particle, or n=Vₚ/Vₜ. A Span value of the third particle PTC3, analyzed through a particle size analyzer, may be in a range of about 0.3 to about 0.75.

When the third particle PTC3 is a secondary particle (third secondary particle), the weight ratio of the second functional additive FAD2 in the second active material layer ATL2 may be equal to or greater than the weight ratio of the first functional additive FAD1 in the first active material layer ATL1. For example, a ratio of the weight ratio of the second functional additive to the weight ratio of the first functional additive may be in a range of about 1 to about 4.5. For example, a ratio of the weight ratio of the second functional additive to the weight ratio of the first functional additive may be about 1 part by weight to about 4 parts by weight, about 1.6 parts by weight to about 4 parts by weight, or about 2.5 parts by weight.

When the third particle PTC3 is a secondary particle (third secondary particle), the content of the second functional additive FAD2 may be in a range of about 2.4 parts by weight to 6.0 parts by weight, or about 2.4 parts by weight, with respect to 100 parts by weight of the second active material layer ATL2. For example, the content of the second binder may be in a range of about 1.2 parts by weight to about 3 parts by weight, or about 1.2 parts by weight, with respect to 100 parts by weight of the second active material layer. For example, the content of the second conductive material may be in a range of about 1.2 parts by weight to about 3 parts by weight, or about 1.2 parts by weight, with respect to 100 parts by weight of the second active material layer. When the content of the second functional additive FAD2 satisfies any of the ranges described above, the second active material layer ATL2 may achieve a desired binding force. When the third particle PTC3 is a secondary particle (third secondary particle), the particle shape of the third particle PTC3 as a secondary particle is different from the particle shape of the third particle PTC3 as a single particle, and thus a binder may be physically less required for a surface.

The third particle PTC3 has a greater average particle diameter when in the form of a secondary particle (third secondary particle) than in the form of a single particle, and accordingly, the second active material layer ATL2 may have desired binding force even when the third particle PTC3 as a secondary particle contains a smaller amount of the second binder BND2 than as a single particle.

According to Comparative Examples of the present disclosure in FIG. 10, the positive electrode active material layer AML1 may only include a nanomorphous positive electrode active material. The nanomorphous positive electrode active material includes an olivine-based compound and may include nano-sized particles NP. For example, the olivine-based compound may be represented by a Formula such as Formula 1 above and/or Formula 3 above. For example, in the nanomorphous positive electrode active material, the nano-sized particles NP may agglomerate to have a particle form that is similar to the particle form of the first particle PTC1 shown in FIG. 7 or the particle form of the third particle PTC3 shown in FIG. 9. Though the nano-sized particles NP agglomerate, the nanomorphous positive electrode active material may not be spherical, unlike the first particle PTC1 shown in FIG. 7 or the third particle PTC3 shown in FIG. 9. The nanomorphous positive electrode active material may have an irregular shape. The nanomorphous positive electrode active material may be provided in various sizes. For example, the nanomorphous positive electrode active material may have an average particle diameter in a range of about 500 nm to about 2.5 µm, or about 1 µm. The nanomorphous positive electrode active material may have a minimum particle diameter in a range of about 100 nm to about 500 nm, or about 200 nm to about 300 nm. In an example embodiment, the average particle diameter (D50) may be measured through a particle size analyzer. The average particle diameter may indicate a particle diameter when a cumulative volume is about 50 vol% in particle size distribution. For example, the minimum particle diameter may indicate a diameter measured by randomly selecting about 30 primary particles from an electron micrograph of the nanomorphous positive electrode active material. The minimum particle size may be about 100 nm greater than the particle size of the first primary particles NNP. The nanomorphous positive electrode active material may have a porosity that is greater than about 40%. A span value of the nanomorphous positive electrode active material, analyzed through a particle size analyzer, may be deviated from a range from about 0.3 to about 0.75.

Referring back to FIG. 7, the first active material layer ATL1 according to an example embodiment of the present disclosure includes both the first particle PTC1 and the second particle PTC2.

The first particle PTC1 is or includes a lithium iron phosphate-based compound having an olivine structure, is highly stable, and has high chemical stability. This compound has desired or improved lifetime characteristics resulting from the stable structure compared to other positive electrode materials, but can undergo degradation in lifetime characteristics at high voltage, leading to limited use of operating voltage. The first particle PTC1 contains manganese (Mn) and may improve high voltage characteristics and energy density compared to general lithium iron phosphate-based compounds.

As shown in FIG. 10, when the size of the particle is too small, binding force between a current collector and a positive electrode active material is low, and accordingly, an electrode plate may be hardly processed, and a binder may be required in large quantities.

The second particle PTC2 may include Co-free lithium nickel manganese-based oxide. The second particle PTC2 may contain substantially no cobalt (Co) but may contain nickel, manganese, and the like, as a key component. A positive electrode active material containing the second particle PTC2 may be economical and may achieve high energy density.

The lithium nickel manganese-based oxide exhibits a higher pellet density when pressed than the olivine structured compound, and may thus resolve an issue of low electrode density shown in the olivine structured phosphate compound.

As shown in FIGS. 6 and 7, when the first active material layer ATL1 is introduced between the current collector COL1 and the second active material layer ATL2, and the second particle PTC2 is mixed with the first particle PTC1 in an appropriate ratio, an electrode plate may have improved binding force and the binder BND may be less required. In addition, the mixing may improve capacity, density characteristics, high temperature stability, and lifetime characteristics. In addition, by mixing the second particle in a bimodal form of large and small particles, density may be further improved.

With respect to a total content of the first particle PTC1, the second particle PTC2, and the third particle PTC3 included in the first active material layer ATL1 and the second active material layer ATL2, the first particle PTC1 may amount to about 30 wt% to about 40 wt%. For example, with respect to a total content of the first particle PTC1, the second particle PTC2, and the third particle PTC3 included in the first active material layer ATL1 and the second active material layer ATL2, the first particle PTC1 may amount to about 35 wt%.

With respect to a total content of the first particle PTC1, the second particle PTC2, and the third particle PTC3 included in the first active material layer ATL1 and the second active material layer ATL2, the second particle PTC2 may amount to a range of about 15 wt% to about 30 wt%. For example, with respect to a total content of the first particle PTC1, the second particle PTC2, and the third particle PTC3 included in the first active material layer ATL1 and the second active material layer ATL2, the second particle PTC2 may amount to about 20 wt% to about 30 wt%, or about 30 wt%.

With respect to a total content of the first particle PTC1 and the second particle PTC2 included in the first active material layer ATL1, the second particle PTC2 may amount to about 40 wt% to about 60 wt%. For example, with respect to a total content of the first particle PTC1 and the second particle PTC2 included in the first active material layer ATL1, the second particle PTC2 may amount to about 45 wt% to about 50 wt%.

Referring back to FIGS. 8 and 9, the second active material layer ATL2 according to an example embodiment of the present disclosure includes the third particle PTC3. With respect to a total content of the first particle PTC1, the second particle PTC2, and the third particle PTC3 included in the first active material layer ATL1 and the second active material layer ATL2, the third particle PTC3 may amount to about 30 wt% to about 40 wt%. For example, with respect to a total content of the first particle PTC1, the second particle PTC2, and the third particle PTC3 included in the first active material layer ATL1 and the second active material layer ATL2, the third particle PTC3 may amount to about 35 wt%.

When the content of the first particle PTC1, the second particle PTC2, and the third particle PTC3 satisfies the ranges described above, the positive electrode active material layer AML1 may have an improved binding force with respect to the current collector COL1. Accordingly, a rechargeable lithium battery having reduced resistance may be provided. In addition, when the content of the first particle PTC1, the second particle PTC2, and the third particle PTC3 satisfy the ranges described above, a rechargeable lithium battery having desired or improved performance may be provided.

A total doping amount of Mn may be in a range of about 0.46 to about 0.52. For example, the total doping amount of Mn may be about 0.49 to about 0.50. Total doping amount of Mn (A+B) may be defined as the sum of a doping amount (A) of Mn contained in the first active material layer ATL1 and a doping amount (B) of Mn contained in the second active material layer ATL2. The doping amount (A) of Mn contained in the first active material layer ATL1 may be defined as the sum of a product of the Mn doping amount (x1 in Formula 1) in the first particle PTC1 and the weight ratio of the first particle PTC1, and a product of the Mn doping amount (z2 in Formula 2) in the second particle PTC2 and the weight ratio of the second particle PTC2. The doping amount (B) of Mn included in the second active material layer ATL2 may be defined as a product of the Mn doping amount (x3 in Formula 3) in the third particle PTC3 and the weight ratio of the third particle PTC3.

When the total doping amount of Mn satisfies any of the ranges described above, the positive electrode active material layer AML1 may have improved binding force with respect to the current collector COL1. Accordingly, a rechargeable lithium battery having reduced resistance may be provided. In addition, a rechargeable lithium battery having desired or improved performance may be provided.

The positive electrode for a rechargeable lithium battery according to example embodiments of the present disclosure has the following effects.

A relatively large amount of the first binder BND1 may be required to attach the small nano-sized particle NP (see FIG. 10) having a small average particle diameter to the current collector COL1 (see FIG. 1), whereas a relatively small amount of the first binder BND1 may be required to fix the first particle PTC1 having a large average particle diameter and/or the second particle PTC2 having a small BET specific surface area and a large average particle diameter onto the first active material layer ATL1. The positive electrode active material layer AML1 according to an example embodiment of the present disclosure includes the first particle PTC1, the second particle PTC2, and the third particle PTC3, and introduces the first active material layer ATL1 and the second active material layer ATL2, and may thus include a nano-sized olivine-based compound in large quantities and increase bindability with respect to a current collector, thereby facilitating preparation of an electrode plate and reducing resistance of an electrode plate. In addition, a rechargeable lithium battery having desired or improved capacity and lifetime characteristics along with high operating voltage and energy density may be provided.

Hereinafter, the present disclosure will be described in more detail through Examples. However, Examples are only illustrations for describing the present disclosure, and the scope of the present disclosure is not limited to the Examples below.

### Preparation Example 1: Preparation of Nickel Manganese Oxide (NMX) Particle

Ni_{0.75}Mn_{0.23}Al_{0.02}(OH)₂ and LiOH were mixed at a molar ratio of 1:1.05 and the mixture was subjected to a primary heat treatment at 900 °C for 8 hours in an oxygen atmosphere to obtain an oxide having a composition of Li_{1.05}Ni_{0.75}Mn_{0.23}Al_{0.02}O₂ and an average particle diameter (D50) of about 4 µm. Aluminium oxide was added to the oxide and then the mixture was subjected to a secondary heat treatment at 825 °C for 8 hours in an oxygen atmosphere to prepare an NMX particle. The NMX particle was represented by Formula of LiNi_{0.75}Mn_{0.23}Al_{0.02}O₂.

### Preparation Example 2: Preparation of Lithium Manganese Iron Phosphate (LMFP) Particle in the form of Secondary Particle

A manganese iron phosphate precursor (Mn_{0.6}Fe_{0.4}PO₄), lithium carbonate, magnesium dioxide, and titanium dioxide were added to water at a molar ratio of (Mn+Fe):Li:Mg:Ti of 1:1.03:0.01:0.004. 10 wt% of glucose was further added to the mixture. The slurry mixture was spray-dried and evaporated to dryness at a spray pressure of 0.5 MPa and a temperature of 230 °C. The dried mixture was fired at 750 °C for 10 hours in a nitrogen atmosphere to obtain an LMFP particle in the form of a secondary particle. The LMFP particle in the form of a secondary particle was approximately represented by Formula of approximately LiMn_{0.6}Fe_{0.4}PO₄.

### Preparation Example 3: Preparation of LMFP Particle in the form of Single Particle

A manganese iron phosphate precursor (Mn_{0.6}Fe_{0.4}PO₄), lithium carbonate, magnesium dioxide, and titanium dioxide were added to water at a molar ratio of (Mn+Fe):Li:Mg:Ti of 1:1.03:0.01:0.004. 10 wt% of glucose was further added to the mixture. The mixture was subjected to a wet grinding process through ball milling. The mixture was evaporated to dryness on a heating tray and then placed and dried in a vacuum oven at 85 °C for 4 hours. The dried mixture was fired at 650 °C for 10 hours in a nitrogen atmosphere. The fired product was ground at a rotation speed of 8000 rpm to obtain an LMFP particle in the form of a single particle. The LMFP particle in the form of a single particle was represented by Formula of approximately LiMn_{0.6}Fe_{0.4}PO₄.

### Example 1: Preparation of Positive Electrode including First Active Material Layer and Second Active Material Layer

The NMX particle, the LMFP particle in the form of a secondary particle, a first binder (polyvinylidene fluoride), and a first conductive material (carbon black) were dispersed in N-methylpyrrolidone at a weight ratio of 0.460:0.516:0.012:0.012 to prepare a first active material slurry.

The LMFP particle in the form of a single particle, a second binder (polyvinylidene fluoride), and a second conductive material (carbon black) were dispersed in N-methylpyrrolidone at a weight ratio of 0.94:0.03:0.03 to prepare a second active material slurry.

The first active material slurry was applied onto a 15 µm thick aluminium (Al) thin film, which is a current collector, and dried to form a first active material layer. The second active material slurry was applied onto the first active material layer and dried to form a second active material layer. The first active material layer and the second active material layer were formed such that the NMX particle, the LMFP particle in the form of a secondary particle in the first active material layer, and the LMFP particle in the form of a single particle in the second active material layer were at a weight ratio of 30:35:35. Through a roll press, a positive electrode in which the aluminium current collector, the first active material layer, and the second active material layer were stacked in this order was prepared. A thickness ratio of the first active material layer and the second active material layer was 5:5.

### Example 2: Preparation of Positive Electrode including First Active Material Layer and Second Active Material Layer

A positive electrode was prepared in the same manner as in Example 1, with a difference that the LMFP particle in the form of a secondary particle, the second binder (polyvinylidene fluoride), and the second conductive material (carbon black) were dispersed in N-methylpyrrolidone at a weight ratio of 0.976:0.012:0.012 to prepare a second active material slurry. A thickness ratio of the first active material layer and the second active material layer was 5:5.

### Comparative Example 1: Preparation of Positive Electrode including One Active Material Layer

The NMX particle, the first binder (polyvinylidene fluoride), and the first conductive material (carbon black) were dispersed in N-methylpyrrolidone at a weight ratio of 0.976:0.012:0.012 to prepare a first active material slurry. The first active material slurry was applied onto a 15 µm thick aluminium (Al) thin film, which is a current collector, and dried to form a first active material layer. Through a roll press, a positive electrode in which the aluminum current collector and the first active material layer were stacked in this order was prepared.

### Comparative Example 2: Preparation of Positive Electrode including One Active Material Layer

A positive electrode was prepared in the same manner as in Comparative Example 1, with a difference that the LMFP particle in the form of a secondary particle, the first binder (polyvinylidene fluoride), and the first conductive material (carbon black) were dispersed in N-methylpyrrolidone at a weight ratio of 0.976:0.012:0.012 to prepare a first active material slurry.

### Comparative Example 3: Preparation of Positive Electrode including One Active Material Layer

A positive electrode was prepared in the same manner as in Comparative Example 1, with a difference that the LMFP particle in the form of a single particle, the first binder (polyvinylidene fluoride), and the first conductive material (carbon black) were dispersed in N-methylpyrrolidone at a weight ratio of 0.94:0.03:0.03 to prepare a first active material slurry.

### Comparative Example 4: Preparation of Positive Electrode including One Active Material Layer

A positive electrode was prepared in the same manner as in Comparative Example 1, with a difference that the NMX particle and the LMFP particle in the form of a secondary particle were mixed to be present at a weight ratio of 70:30, and the mixture was dispersed in N-methylpyrrolidone along with the first binder (polyvinylidene fluoride) and the first conductive material (carbon black) to prepare a first active material slurry.

### Comparative Example 5: Preparation of Positive Electrode including One Active Material Layer

A positive electrode was prepared in the same manner as in Comparative Example 1, with a difference that the NMX particle and the LMFP particle in the form of a secondary particle were mixed to be present at a weight ratio of 60:40, and the mixture was dispersed in N-methylpyrrolidone along with the first binder (polyvinylidene fluoride) and the first conductive material (carbon black) to prepare a first active material slurry.

### Comparative Example 6: Preparation of Positive Electrode including One Active Material Layer

A positive electrode was prepared in the same manner as in Comparative Example 1, with a difference that the NMX particle and the LMFP particle in the form of a secondary particle were mixed to be present at a weight ratio of 50:50, and the mixture was dispersed in N-methylpyrrolidone along with the first binder (polyvinylidene fluoride) and the first conductive material (carbon black) to prepare a first active material slurry.

### Comparative Example 7: Preparation of Positive Electrode including One Active Material Layer

A positive electrode was prepared in the same manner as in Comparative Example 1, with a difference that the NMX particle and the LMFP particle in the form of a secondary particle were mixed to be present at a weight ratio of 40:60, and the mixture was dispersed in N-methylpyrrolidone along with the first binder (polyvinylidene fluoride) and the first conductive material (carbon black) to prepare a first active material slurry.

### Comparative Example 8: Preparation of Positive Electrode including One Active Material Layer

A positive electrode was prepared in the same manner as in Comparative Example 1, with a difference that the NMX particle and the LMFP particle in the form of a secondary particle were mixed to be present at a weight ratio of 30:70, and the mixture was dispersed in N-methylpyrrolidone along with the first binder (polyvinylidene fluoride) and the first conductive material (carbon black) to prepare a first active material slurry.

### Comparative Example 9: Preparation of Positive Electrode including One Active Material Layer

A positive electrode was prepared in the same manner as in Comparative Example 1, with a difference that the NMX particle and the LMFP particle in the form of a secondary particle were mixed to be present at a weight ratio of 20:80, and the mixture was dispersed in N-methylpyrrolidone along with the first binder (polyvinylidene fluoride) and the first conductive material (carbon black) to prepare a first active material slurry.

### Comparative Example 10: Preparation of Positive Electrode including One Active Material Layer

A positive electrode was prepared in the same manner as in Comparative Example 1, with a difference that the NMX particle and the LMFP particle in the form of a secondary particle were mixed to be present at a weight ratio of 10:90, and the mixture was dispersed in N-methylpyrrolidone along with the first binder (polyvinylidene fluoride) and the first conductive material (carbon black) to prepare a first active material slurry.

### Comparative Example 11: Preparation of Positive Electrode including One Active Material Layer

A positive electrode was prepared in the same manner as in Comparative Example 1, with a difference that the NMX particle, the LMFP particle in the form of a secondary particle, and the LMFP particle in the form of a single particle were mixed to be present at a weight ratio of 30:35:35, and the mixture was dispersed in N-methylpyrrolidone along with the first binder (polyvinylidene fluoride) and the first conductive material (carbon black) to prepare a first active material slurry. The amounts of the first binder and the first conductive material are as shown in Table 2.

### Comparative Example 12: Preparation of Positive Electrode including One Active Material Layer

A positive electrode was prepared in the same manner as in Comparative Example 1, with a difference that the NMX particle and the LMFP particle in the form of a single particle were mixed to be present at a weight ratio of 30:70, and the mixture was dispersed in N-methylpyrrolidone along with the first binder (polyvinylidene fluoride) and the first conductive material (carbon black) to prepare a first active material slurry. The amounts of the first binder and the first conductive material are as shown in Table 2.

### Reference Example 13: Preparation of Positive Electrode including First Active Material Layer and Second Active Material Layer

A positive electrode with FAD2/FAD1=1 was prepared.

A positive electrode was prepared in the same manner as in Example 1, with a difference that the NMX particle, the LMFP particle in the form of a secondary particle, the first binder (polyvinylidene fluoride), and the first conductive material (carbon black) were dispersed in N-methylpyrrolidone at a weight ratio of 0.460:0.516:0.012:0.12 to prepare a first active material slurry, and the LMFP particle in the form of a single particle, the second binder (polyvinylidene fluoride), and the second conductive material (carbon black) were dispersed in N-methylpyrrolidone at a weight ratio of 0.976:0.012:0.012 to prepare a second active material slurry.

### Reference Example 14: Preparation of Positive Electrode including First Active Material Layer and Second Active Material Layer

A positive electrode with FAD2/FAD1=4.2 was prepared.

A positive electrode was prepared in the same manner as in Example 1, with a difference that the NMX particle, the LMFP particle in the form of a secondary particle, the first binder (polyvinylidene fluoride), and the first conductive material (carbon black) were dispersed in N-methylpyrrolidone at a weight ratio of 0.460:0.516:0.012:0.12 to prepare a first active material slurry, and the LMFP particle in the form of a single particle, the second binder (polyvinylidene fluoride), and the second conductive material (carbon black) were dispersed in N-methylpyrrolidone at a weight ratio of 0.90:0.05:0.05 to prepare a second active material slurry.

### Preparation of Rechargeable Lithium Battery

A 2032 type coin half-cell was prepared using the prepared positive electrode and a lithium metal counter electrode as a counter electrode. A separator (thickness: about 16 µm) formed a porous polyethylene (PE) film was placed between the positive electrode and the lithium metal counter electrode, and an electrolyte solution was injected to prepare a rechargeable lithium battery. As an electrolyte, an electrolyte solution obtained by mixing 1.3 M LiPF₆ with a mixed solvent containing ethylene carbonate (EC), ethylmethyl carbonate (EMC), and dimethyl carbonate (DMC) in a volume ratio of 3:4:3 was used.

Examples Comparative Examples, and Reference Examples are summarized in Table 1 and 2 below. Referring to Tables 1 and 2, Examples 1 and 2 comprise the LMX particle and the LMFP particle, and have a double layer structure. On the other hand, Comparative Examples 1 to 12 comprises the LMX particle and the LMFP particle, but have a single layer structure. Reference Examples 13 and 14 differ from Example 1 only in a weight ratio of FAD2/FAD1.

**Table 1:**

| Item | Electrode plate structure | Mn doping content when mixed | Content ratio of particle (wt%) | | |
|---|---|---|---|---|---|
| | | | NMX particle | LMFP particle in the form of secondary particle | LMFP particle in the form of single particle |
| Example 1 | Double layer | 0.49 | 30 | 35 | 35 |
| Example 2 | Double layer | 0.49 | 30 | 70 | |
| Comparative Example 1 | Single layer | - | 100 | - | - |
| Comparative Example 2 | Single layer | - | - | 100 | - |
| Comparative Example 3 | Single layer | - | - | - | 100 |
| Comparative Example 4 | Single layer | 0.34 | 70 | 30 | - |
| Comparative Example 5 | Single layer | 0.38 | 60 | 40 | - |
| Comparative Example 6 | Single layer | 0.42 | 50 | 50 | - |
| Comparative Example 7 | Single layer | 0.45 | 40 | 60 | - |
| Comparative Example 8 | Single layer | 0.49 | 30 | 70 | - |
| Comparative Example 9 | Single layer | 0.53 | 20 | 80 | - |
| Comparative Example 10 | Single layer | 0.56 | 10 | 90 | - |
| Comparative Example 11 | Single layer | 0.49 | 30 | 35 | 35 |
| Comparative Example 12 | Single layer | 0.49 | 30 | - | 70 |
| Reference Example 13 | Double layer | 0.49 | 30 | 35 | 35 |
| Reference Example 14 | Double layer | 0.49 | 30 | 35 | 35 |

**Table 2:**

| Item | Content of first functional additive FAD1 in first active material layer (parts by weight/100 parts by weight of first active material layer) | | Content of second functional additive FAD2 in second active material layer (Parts by weight/100 parts by weight of second active material layer) | | Weight ratio of FAD2/FAD 1 |
|---|---|---|---|---|---|
| | First binder | First conductive material | Second binder | Second conductive material | |
| Example 1 | 1.2 | 1.2 | 3 | 3 | 2.5 |
| Example 2 | 1.2 | 1.2 | 1.2 | 1.2 | 1 |
| Comparative Example 1 | 1.2 | 1.2 | - | - | - |
| Comparative Example 2 | 1.2 | 1.2 | - | - | - |
| Comparative Example 3 | 3 | 3 | - | - | - |
| Comparative Example 4 | 1.2 | 1.2 | - | - | - |
| Comparative Example 5 | 1.2 | 1.2 | - | - | - |
| Comparative Example 6 | 1.2 | 1.2 | - | - | - |
| Comparative Example 7 | 1.2 | 1.2 | - | - | - |
| Comparative Example 8 | 1.2 | 1.2 | - | - | - |
| Comparative Example 9 | 1.2 | 1.2 | - | - | - |
| Comparative Example 10 | 1.2 | 1.2 | - | - | - |
| Comparative Example 11 | 2 | 2 | - | - | - |
| Comparative Example 12 | 2 | 2 | - | - | - |
| Reference Example 13 | 1.2 | 1.2 | 1.2 | 1.2 | 1 |
| Reference Example 14 | 1.2 | 1.2 | 5.0 | 5.0 | 4.2 |

### Evaluation Example 1: Analysis of Positive Electrode Active Material Surface

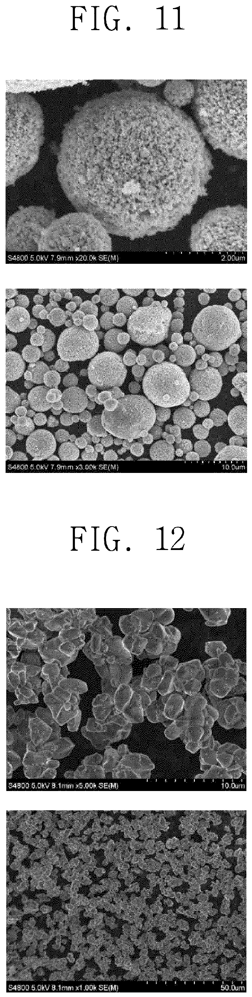

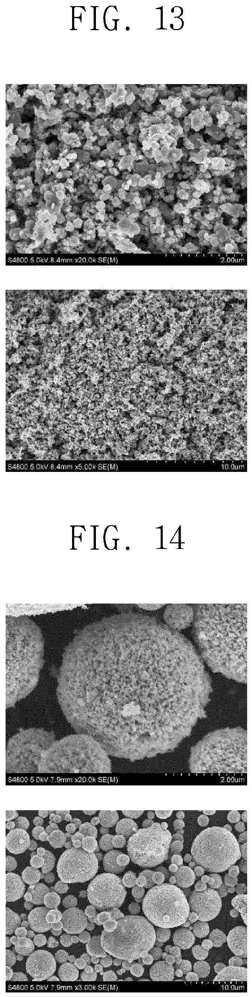

SEM images for each of the first, second, and third particles prepared in Preparation Examples 1 to 3 are shown in FIGS. 11 to 14. Referring to FIG. 11, the first particle according to Preparation Example 2 is in the form of a spherical secondary particle in which a plurality of primary particles are aggregated. Referring to FIG. 12, the second particle according to Preparation Example 1 is in the form of a micro-sized fine single particle. Referring to FIG. 13, the third particle according to Preparation Example 3 is in the form of a nano-sized fine single particle. Referring to FIG. 14, the third particle according to Preparation Example 2 is in the form of a spherical secondary particle in which a plurality of primary particles are aggregated.

### Evaluation Example 2: Evaluation of Active Material

Pellet density (PD) of the positive electrode active materials of Examples, Comparative Examples, and Reference Examples was measured, and the results are shown in Table 3 below.

**Table 3:**

| Item | Pellet density (g/cc) |
|---|---|
| Example 1 | 2.58 |
| Example 2 | 2.59 |
| Comparative Example 1 | 3.10 |
| Comparative Example 2 | 2.41 |
| Comparative Example 3 | 2.35 |
| Comparative Example 4 | 2.89 |
| Comparative Example 5 | 2.82 |
| Comparative Example 6 | 2.76 |
| Comparative Example 7 | 2.69 |
| Comparative Example 8 | 2.62 |
| Comparative Example 9 | 2.55 |
| Comparative Example 10 | 2.48 |
| Comparative Example 11 | 2.60 |
| Comparative Example 12 | 2.58 |
| Reference Example 13 | 2.52 |
| Reference Example 14 | 2.50 |

### Evaluation Example 3: Evaluation of Resistance and Bindability

Characteristics of rechargeable lithium batteries prepared using positive electrode active materials each from Examples, Comparative Examples, and Reference Examples were evaluated.

For initial charging/discharging, the rechargeable lithium batteries were initially charged at a constant current of 0.2 C and a constant voltage (4.45 V) (cut-off 0.05C) at 25 °C, and after 10 minutes of rest, discharged up to 3.0 V at a constant current of 0.2 C, so as to obtain the initial charge capacity at 0.2 C and the initial discharge capacity at 0.2 C. The efficiency at 0.2 C (%) is expressed as the initial discharge capacity at 0.2 C /initial charge capacity at 0.2 C. The rechargeable lithium batteries were charged to SOC50 at a constant current of 0.2 C, and then rest for 1 hour at SOC50. After that, the rechargeable lithium batteries were discharged at 1.0 C for 10 seconds, followed by another 10-second rest. At this point, the difference between the voltage after the discharge and the voltage after the 10-second rest was divided by the current to calculate the cell resistance (DC-IR). The results are shown in Table 4 below.

**Table 4:**

| Item | 0.2 C charge amount (mAh/g) | 0.2 C discharge amount (mAh/g) | 0.2 C efficiency (%) | DCIR, SOC50 (Ω, 0.2 C/1.0 C) |
|---|---|---|---|---|
| Example 1 | 178.5 | 163.2 | 91.4 | 24.2 |
| Example 2 | 178.9 | 164.1 | 91.7 | 24.2 |
| Comparative Example 1 | 230.0 | 200.0 | 87.0 | 6.5 |
| Comparative Example 2 | 156.2 | 148.1 | 94.8 | 37.2 |
| Comparative Example 3 | 155.0 | 145.0 | 93.5 | 43.0 |
| Comparative Example 4 | 207.9 | 184.4 | 88.7 | 15.7 |
| Comparative Example 5 | 200.5 | 179.2 | 89.4 | 18.8 |
| Comparative Example 6 | 193.1 | 174.1 | 90.1 | 21.9 |
| Comparative Example 7 | 185.7 | 168.9 | 90.9 | 24.9 |
| Comparative Example 8 | 178.3 | 163.7 | 91.8 | 28.0 |
| Comparative Example 9 | 171.0 | 158.5 | 92.7 | 31.1 |
| Comparative Example 10 | 163.6 | 153.3 | 93.7 | 34.1 |
| Comparative Example 11 | 177.9 | 162.6 | 91.4 | 30.0 |
| Comparative Example 12 | 177.5 | 161.5 | 91.0 | 32.1 |
| Reference Example 13 | 176.3 | 161.4 | 91.5 | 35.1 |
| Reference Example 14 | 173.2 | 157.5 | 90.9 | 38.6 |

Referring to Table 4, the rechargeable lithium batteries including the positive electrodes according to Examples 1 and 2 have a higher discharge amount and lower resistance than Comparative Examples 2, 3, and 12. Accordingly, the addition of NMX particles in the first active material layer increases the binding force of the positive electrode containing an olivine-based compound.

In addition, the rechargeable lithium batteries including the positive electrodes according to Examples 1 and 2 have lower resistance than Reference Examples 13 and 14. Accordingly, when the ratio of the weight ratio of the second functional additive to the weight ratio of the first functional additive satisfies the desired range, the binding force of the positive electrode may be increased.

### Evaluation Example 4: Evaluation of Battery Properties

Characteristics of rechargeable lithium batteries prepared using positive electrode active materials each from Examples, Comparative Examples, and Reference Examples were evaluated.

For initial charging/discharging, the rechargeable lithium batteries were initially charged at a constant current of 0.2 C and a constant voltage (4.45 V) (cut-off 0.05C) at 25 °C, and after 10 minutes of rest, discharged up to 3.0 V at a constant current of 0.2 C, and then the average voltage and energy density were evaluated. The average voltage was obtained by integrating an area under a discharge voltage curve (a-voltage-capacity graph) after the initial charging and discharging of the cells and then dividing the integral by discharge capacity. The energy density was obtained by using a calculation equation of {average driving voltage (V) x capacity (Ah)/cell weight (kg)}, wherein the capacity was calculated by multiplying a positive electrode weight (g) and discharge capacity (mAh/g). Thereafter, the charging/discharging was repeated 50 times at 45 °C and 1.0 C/1.0 C. The lifetime (1 C lifetime (%, @50ccl)) is expressed as the discharge capacity after the 50th cycle / initial discharge capacity. Coin cells were additionally prepared and then the batteries were initially charged at a constant current of 0.2 C and a constant voltage (4.45 V) (cut-off 0.05C) at 25 °C, and after 10 minutes of rest, discharged up to 3.0 V at a constant current of 0.2 C and additionally charged, and then measured at -20 °C for discharge capacity. The results of evaluating the battery properties are shown in Table 5 below.

**Table 5:**

| Item | -20 °C capacity (mAh/g) | Average voltage | 1 C lifetime (%, @50ccl) | Energy density (Wh/kg) |
|---|---|---|---|---|
| Example 1 | 98 | 3.66 | 99.4 | 597 |
| Example 2 | 98 | 3.66 | 99.8 | 599 |
| Comparative Example 1 | 65 | 3.79 | 98.4 | 659 |
| Comparative Example 2 | 126 | 3.60 | 99.8 | 488 |
| Comparative Example 3 | 96 | 3.60 | 99.1 | 478 |
| Comparative Example 4 | 83 | 3.73 | 98.4 | 688 |
| Comparative Example 5 | 89 | 3.71 | 98.6 | 666 |
| Comparative Example 6 | 96 | 3.70 | 98.7 | 643 |
| Comparative Example 7 | 102 | 3.68 | 98.8 | 625 |
| Comparative Example 8 | 108 | 3.66 | 99.0 | 597 |
| Comparative Example 9 | 114 | 3.64 | 99.1 | 569 |
| Comparative Example 10 | 120 | 3.62 | 99.3 | 542 |
| Comparative Example 11 | 97 | 3.66 | 98.7 | 595 |
| Comparative Example 12 | 87 | 3.66 | 98.9 | 594 |
| Reference Example 13 | 85 | 3.66 | 95.2 | 590 |
| Reference Example 14 | 73 | 3.66 | 94.2 | 580 |

Referring to Tables 4 and 5, the rechargeable lithium batteries including the positive electrodes according to Examples 1 and 2 have desired or improved capacity and lifetime characteristics, along with high operating voltage and energy density.

A positive electrode for a rechargeable lithium battery according to an example embodiment of the present disclosure contains a nano-sized olivine-based compound in large quantities and increases binding force with respect to a current collector, and may thus facilitate the preparation of an electrode plate and reduce resistance of an electrode plate.

A rechargeable lithium battery according to an example embodiment of the present disclosure may have desired or improved capacity and lifetime characteristics, along with high operating voltage and energy density.

The above Examples and Comparative Examples are provided in order to highlight characteristics of one or more example embodiments, but it will be understood that the Examples and Comparative Examples are not to be construed as limiting the scope of the example embodiments.

Further, it will be understood that the example embodiments are not limited to the particular details described in the Examples and Comparative Examples.

## Claims

1. A positive electrode for a rechargeable lithium battery, the positive electrode comprising:
a current collector;
a first active material layer on the current collector, the first active material layer including a first particle, a second particle, a first binder, and a first conductive material; and
a second active material layer on the first active material layer, the second active material layer including a third particle, a second binder, and a second conductive material,
wherein the first particle comprises an olivine structured compound of Formula 1 below,
the second particle comprises a layered compound of Formula 2 below,
the third particle comprises an olivine structured compound of Formula 3 below,
the first active material layer and the second active material layer have a cobalt (Co) content that is less than about 100 ppm,
the first particle comprises a plurality of first primary particles aggregated together,
the first particle has an average particle diameter in a range of about 2 µm to about 15 µm,
the first primary particles have a particle size in a range of about 200 nm or less,
the third particle is a single particle, and
the third particle has an average particle diameter in a range of about 100 nm to about 2 µm,
Formula 1: Liₐ₁Mnₓ₁Fe_{y1}B1_{z1}PO_{4-b1}
wherein in Formula 1, 0.8≤a1≤1.2, 0.4≤x1≤0.8, 0≤y1≤0.6, 0≤z1≤0.05, 0≤b1≤0.05, and x1 + y1 + z1 = 1 are satisfied, and
B1 comprises at least one of Al, Ti, V, and Mg,
Formula 2: Liₐ₂Niₓ₂Mn_{z2}Al_{c2}Y_{d2}O_{2-b2}
wherein in Formula 2, 0.8<a2≤1.2, 0.7≤x2≤0.8, 0.2≤z2≤0.3, 0≤c2≤0.02, 0≤d2≤0.003, 0≤b2≤0.05, and x2 + z2 + c2 + d2 = 1 are satisfied, and
Y comprises at least one of Ti, Mg, Zr, Mo, and Nb, and
Formula 3: Liₐ₃Mnₓ₃Fe_{y3}B3_{z3}PO_{4-b3}
wherein in Formula 3, 0.8≤a3≤1.2, 0.4≤x3≤0.8, 0≤y3≤0.6, 0≤z3≤0.05, 0≤b3≤0.05, and x3 + y3 + z3 = 1 are satisfied, and
B3 comprises at least one of Al, Ti, V, and Mg.

2. The positive electrode for a rechargeable lithium battery of claim 1, wherein with respect to a total content of the first particle, the second particle, and the third particle, the content of the second particle is in a range about 15 wt% to about 30 wt%.

3. The positive electrode for a rechargeable lithium battery of claim 1 or claim 2, wherein a total doping amount of Mn in Formulas 1, 2 and 3 is in a range of about 0.46 to about 0.52.

4. The positive electrode for a rechargeable lithium battery of any one of claims 1 to 3, wherein a thickness ratio of the first active material layer and the second active material layer is in a range of about 3:7 to about 7:3.

5. The positive electrode for a rechargeable lithium battery of any one of claims 1 to 4, wherein the first particle has a porosity in a range of about 20% to about 40%.

6. The positive electrode for a rechargeable lithium battery of any one of claims 1 to 5, wherein the second particle is a single crystal.

7. The positive electrode for a rechargeable lithium battery of any one of claims 1 to 6, wherein the second particle has an average particle diameter in a range of about 3 µm to about 7 µm.

8. The positive electrode for a rechargeable lithium battery of any one of claims 1 to 7, wherein the second particle has a BET specific surface area in a range of about 0.8 m²/g to about 1.2 m²/g.

9. The positive electrode for a rechargeable lithium battery of any one of claims 1 to 8, wherein:
the first binder and the first conductive material constitute a first functional additive,
the second binder and the second conductive material constitute a second functional additive, and
the first functional additive in the first active material layer has a lower weight ratio than the second functional additive in the second active material layer.

10. The positive electrode for a rechargeable lithium battery of claim 9, wherein a ratio of the weight ratio of the second functional additive to the weight ratio of the first functional additive is in a range of about 1.6 to about 4.5.

11. A positive electrode for a rechargeable lithium battery, the positive electrode comprising:
a current collector;
a first active material layer on the current collector, the first active material layer including a first particle, a second particle, a first binder, and a first conductive material; and
a second active material layer on the first active material layer, the second active material layer including a third particle, a second binder, and a second conductive material,
wherein the first particle comprises an olivine structured compound of Formula 1 below,
the second particle comprises a layered compound of Formula 2 below,
the third particle comprises an olivine structured compound of Formula 3 below,
the first active material layer and the second active material layer have a cobalt (Co) content that is less than about 100 ppm,
the first particle comprises a plurality of first primary particles aggregated together,
the first particle has an average particle diameter in a range of about 2 µm to about 15 µm,
the first primary particles have a particle size in a range of about 200 nm or less,
the third particle comprises a plurality of fourth particles aggregated together,
the third particle has an average particle diameter in a range of about 2 µm to about 15 µm, and
the plurality of fourth particles are each primary particles, and the plurality of fourth particles have a particle diameter in a range of about 200 nm or less,
Formula 1: Liₐ₁Mnₓ₁Fe_{y1}B1_{z1}PO_{4-b1}
wherein in Formula 1, 0.8≤a1≤1.2, 0.4≤x1≤0.8, 0≤y1≤0.6, 0≤z1≤0.05, 0≤b1≤0.05, and x1 + y1 + z1 = 1 are satisfied, and
B1 comprises at least one of Al, Ti, V, and Mg,
Formula 2: Liₐ₂Niₓ₂Mn_{z2}Al_{c2}Y_{d2}O_{2-b2}
wherein in Formula 2, 0.8<a2≤1.2, 0.7≤x2≤0.8, 0.2≤z2≤0.3, 0≤c2≤0.02, 0≤d2≤0.003, 0≤b2≤0.05, and x2 + z2 + c2 + d2 = 1 are satisfied, and
Y comprises at least one of Ti, Mg, Zr, Mo, and Nb, and
Formula 3: Liₐ₃Mnₓ₃Fe_{y3}B3_{z3}PO_{4-b3}
wherein in Formula 3, 0.8≤a3≤1.2, 0.4≤x3≤0.8, 0≤y3≤0.6, 0≤z3≤0.05, 0≤b3≤0.05, and x3 + y3 + z3 = 1 are satisfied, and
B3 comprises at least one of Al, Ti, V, and Mg.

12. The positive electrode for a rechargeable lithium battery of claim 11, wherein with respect to a total content of the first particle, the second particle, and the third particle, the content of the second particle is in a range of about 15 wt% to about 30 wt%.

13. The positive electrode for a rechargeable lithium battery of claim 11 or claim 12, wherein a total doping amount of Mn in Formulas 1, 2 and 3 is in a range of about 0.46 to about 0.52.

14. The positive electrode for a rechargeable lithium battery of any one of claims 11 to 13, wherein a thickness ratio of the first active material layer and the second active material layer is in a range of about 3:7 to about 7:3.

15. The positive electrode for a rechargeable lithium battery of any one of claims 11 to 14, wherein the second particle is a single crystal.
